(19) Europäisches Patentamt / European Patent Office / Office européen des brevets

(11) **EP 1 553 129 B2**

(12) **NEW EUROPEAN PATENT SPECIFICATION**
After opposition procedure

(45) Date of publication and mention
of the opposition decision:
**23.07.2014 Bulletin 2014/30**

(45) Mention of the grant of the patent:
**25.07.2007 Bulletin 2007/30**

(21) Application number: **04102405.0**

(22) Date of filing: **28.05.2004**

(51) Int Cl.:
*C08J 9/14* (2006.01)       *C08G 18/48* (2006.01)
*C08G 18/50* (2006.01)

(54) **Method for producing rigid polyurethane foam**

Verfahren zur Herstellung von Polyurethan Hartschaumstoffen

Procédé pour la production de mousse de polyuréthane rigide

(84) Designated Contracting States:
**DE GB IT**

(30) Priority: **08.01.2004 KR 2004001036**
**14.05.2004 KR 2004034455**

(43) Date of publication of application:
**13.07.2005 Bulletin 2005/28**

(73) Proprietor: **Samsung Electronics Co., Ltd.**
**Suwon-si, Gyeonggi-do, 443-742 (KR)**

(72) Inventors:
• **Suck, Sang-jo**
**Kwangju (KR)**
• **Kim, Bong-ku**
**Kwangsan-gu**
**Kwangju (KR)**
• **An, Jang-su**
**Kwangsan-gu**
**Kwangju (KR)**
• **Kim, Hyo-seob**
**Kwangsan-gu**
**Kwangju (KR)**
• **Yang, Dae-sung**
**Kwangju, (KR)**
• **Ahn, Seong-ho**
**Nam-gu**
**Kwangju (KR)**
• **Kim, Hong-gl**
**Jang seong-gun**
**Jeollanam-do, (KR)**
• **Lee, Suk-jo**
**Kwangju, (KR)**
• **Kim, Jeong-hon**
**Buk-gu**
**Gwangju (KR)**

(74) Representative: **Jump, Timothy John Simon et al**
**Venner Shipley LLP**
**200 Aldersgate**
**London EC1A 4HD (GB)**

(56) References cited:
EP-A- 0 934 971        WO-A1-00/24815
WO-A1-97/35899        US-A- 4 981 879
US-A- 5 258 418        US-A- 5 260 347
US-A- 5 290 823        US-A- 5 290 823
US-A- 5 428 104        US-A- 5 539 008
US-A- 5 698 606

• YOSHIMURA H ET AL: "AN INSIGHT INTO THE CHARACTERISTICS OF A NUCLEATION CATALYST IN CFC-FREE RIGID FOAM SYSTEMS" 9 October 1994 (1994-10-09), ANNUAL POLYURETHANE TECHNICAL CONFERENCE, PAGE(S) 300-310 , XP000654827 * page 306, left-hand column - page 308, left-hand column * * table 5 *
• EDWARD L. ET AL: 'Handbook of Industrial Mixing: Science and Practice', 2004, JOHN WILEY & SONS INC. deel 'Chapter 8: Rotor-Stator Mixing Devices', page 489

Remarks:
The file contains technical information submitted after the application was filed and not included in this specification

**Description**

The present invention relates to a method of producing a rigid polyurethane foam, comprising preparing a polyol mixture comprising polyol and a nucleating agent, and reacting the polyol mixture with polyisocyanate. The invention also relates to a substance suitable for use in a method of rigid polyurethane foam production.

To obtain rigid polyurethane foam, CFCs (chlorofluorocarbons) such as trichlorofluoromethane or dichlorofluoromethane are conventionally used as blowing agents. However, CFCs are regarded as environmentally harmful materials, because they deplete the ozone layer and contribute to the greenhouse effect. Thus, the production and use of CFCs has been banned in the developed world, and CFCs are now being replaced by other compounds.

As substitutes for CFCs, HCFCs (hydrochlorofluorocarbons) have been used as blowing agents, since they are less destructive of the ozone layer than CFCs. The closed cell size of the rigid polyurethane foam formed using HCFCs is 200 - 300 $\mu$m, which is greater than that formed using CFCs, but the rigid polyurethane foam formed using HCFCs has excellent thermal insulating properties (adiabatic index: 0.0144 mW/mk) due to the low gas adiabatic index of the HCFCs (adiabatic index: 0.0094 mW/mk). Nevertheless, HCFCs are still sufficiently harmful towards the ozone layer to mean that their use is gradually being phased out.

A hydrocarbon blowing agent such as cyclopentane, which does not destroy the ozone layer, was recently proposed. Since the rigid polyurethane foam formed using cyclopentane has a large closed cell size of 200- 300 $\mu$m, however, and the adiabatic index of cyclopentane is 0.012 mW/mk (which is higher than the adiabatic index of CFCs and HCFCs), the rigid polyurethane foam is relatively ineffective as a thermal insulator (adiabatic index: 0.0165 mW/mk). Accordingly, a larger volume of the foam is needed to obtain the same adiabatic effect as that afforded by the foam produced using CFCs and HCFCs.

In an attempt to solve such problems, a nucleating agent, such as a perfluorinated alkene, has been used in the reaction. However, it has been found that the nucleating agent makes the reaction system unstable and the rigid polyurethane foam obtained is a relatively poor thermal insulator.

According to the present invention, there is provided a method of producing a rigid polyurethane foam, comprising preparing a polyol mixture comprising polyol and a nucleating agent, and reacting the polyol mixture with polyisocyanate, wherein the preparation of the polyol mixture comprises emulsifying the nucleating agent with some of the polyol to produce an emulsion, and combining the emulsified nucleating agent with the remaining polyol, said nucleating agent comprising a perfluorinated alkene containing at least 6 carbons, wherein 15 - 70 parts by weight of the total amount of polyol in the polyol mixture is a toluenediamine-based polyol.

A foam stabiliser may be included in the polyol mixture such that all or some of the foam stabiliser is present the emulsion. 10 - 30 % by weight of the polyol in the polyol mixture supplied to the polyol-polyisocyanate reaction process, may be used to produce the emulsion.

According to an aspect of the present invention there is provided an emulsion comprising polyol and a nucleating agent comprising a perfluorinated alkene containing at least 6 carbons, suitable for use in a method of rigid polyurethane foam production, wherein 15 - 70 parts by weight of the total amount the polyol mixture is a toluenediamine-based polyol.

Additional preferred and optional features are set forth in claims 2 to 10 appended hereto.

Embodiments of the present invention will now be described, by way of example, with reference to the accompanying drawing, in which:

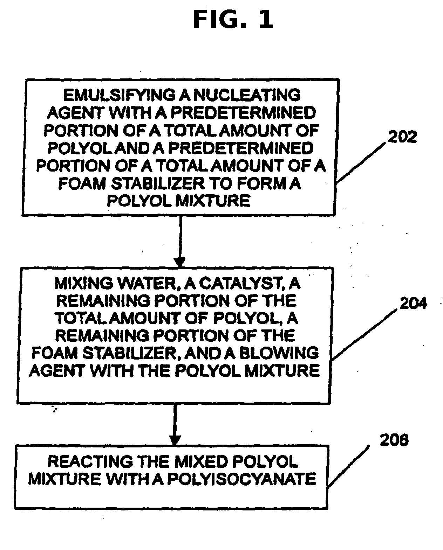

Figure 1 is a flowchart illustrating a method according to the present invention.

Generally, the thermal insulating property of the rigid polyurethane foam is represented by the following equation (1):

$$\lambda_{total} = \lambda_{gas} + \lambda_{solid} + \lambda_{radiation}$$

in which $\lambda_{gas}$ is the adiabatic index of the blowing agent residing in the closed cell of the foam, and represents 74 % of the total adiabatic index ($\lambda_{total}$). Furthermore, the concentration of the blowing agent affects the thermal insulating capacity of the foam, in that the adiabatic index of the foam decreases (i.e. the foam becomes a better thermal insulator) as the proportion of blowing agent in the foam increases. $\lambda_{solid}$ is the adiabatic index of the polyurethane resin comprised in the rigid polyurethane foam and represents 10 % of $\lambda_{total}$. This may be affected by the density of the foam, but on the whole this is not a significant effect. Generally, the rigid polyurethane foam is most effective as a thermal insulator when the density is 30 - 40 kg/m$^3$. $\lambda_{radiation}$ is the adiabatic index relating to radiation between the closed cells of the rigid polyurethane foam and represents 16% of $\lambda_{total}$. It has been found that the thermal insulating property tends to increase as the closed cell size of the rigid polyurethane foam decreases.

Accordingly, if a cyclopentane having a high adiabatic index is used as the blowing agent, $\lambda_{gas}$ is relatively high and so to compensate the $\lambda_{radiation}$ of Equation (1) should be lowered to improve the thermal insulating properties, for example by decreasing the size of the closed cell.

To achieve this decrease in the size of the closed cell, the present invention adopts a nucleating agent which is initially in a liquid phase. By introducing the nucleating agent to the reaction in this way, numerous nuclei of microbubbles are generated at the initial step of the reaction. The nuclei of the microbubbles maintain their state sufficiently throughout the reaction; thus the size of the resulting closed cell is small. In a conventional reaction system to prepare a rigid polyurethane foam, however, the introduction of the nucleating agent in a significant amount may cause the reaction system to become unstable because it easily induces phase separation. Thus, maintaining a small size of the closed cell is difficult.

To solve such problems, the present invention uses the nucleating agent in an emulsified state. In a reaction system to prepare the rigid polyurethane foam with an emulsified nucleating agent, the nuclei of the microbubbles are generally generated at the initial step of reaction, when all components are mixed. After the mixing, the reactant swells due to the chemical reaction and expansion of the blowing agent, and then the urethane reaction follows. Foaming is terminated with a closed cell size of less than 150 $\mu$m, and the reactant solidifies.

In particular it is thought that, by using an emulsified nucleating agent, numerous nuclei of microbubbles may be generated at the initial step of the reaction due to the incompatibility between a polar polyol and a non-polar nucleating agent. The emulsified state prevents the microbubbles from growing by reducing their surface tension. Thus, a majority of the nuclei of the microbubbles remain throughout the reaction, and the size of the closed cell of the solidified rigid polyurethane foam is minimized.

A description of the method of emulsifying the nucleating agent in accordance with the present invention follows. Generally, the rigid polyurethane foam is prepared by reaction of the polyisocyanate and the polyol mixture, which comprises water, a foam stabilizer, a blowing agent, a catalyst, a polyol, and a nucleating agent.

An emulsified nucleating agent is obtained by mixing at least the nucleating agent and some of the polyol to form an emulsion. Preferably, the foam stabilizer is also included in the emulsion. The proportion of any foam stabilizer emulsified with the nucleating agent may be a part of the total amount that is used in the overall reaction. The mixture to be emulsified may also contain the water, the catalyst and the blowing agent, in the whole or a part of the amount that is used in the overall reaction. For example, after emulsifying the nucleating agent with the polyol (in an amount of 30 % of the total polyol component), the polyol mixture may be obtained by combining the emulsified nucleating agent with the remaining polyol (which may comprise an additional polyol compound), foam stabilizer, an additional foam stabilizer, the water, the catalyst, and the blowing agent. Emulsifying the nucleating agent with a part of the total polyol component is more effective than emulsifying the nucleating agent with the whole amount of polyol. In one embodiment of the present invention, the nucleating agent may be emulsified with 10 - 30 parts by weight of the total polyol component.

Various methods may be used to obtain the polyol mixture comprising an emulsified nucleating agent. For example, the polyol mixture may be obtained by emulsifying the nucleating agent with the foam stabilizer and the polyol, subsequently adding (and mixing) the water and the catalyst, then adding (and mixing) the blowing agent. Alternatively, the polyol mixture may be obtained by agitating all the components of the polyol mixture together.

In summary, in preparing the polyol mixture comprising the emulsified nucleating agent, whereas it is essential to mix at the minimum the nucleating agent and a part of the total amount of polyol to form an emulsion, there are various combinations of stages at which the water, the catalyst, the blowing agent, the remaining polyol, and the foam stabilizer may be added. Very preferably, however, at least part of the total amount of foam stabilizer is included in the mixture which is emulsified.

In the present invention, the nucleating agent comprises a perfluorinated alkene containing at least 6 carbon atoms preferably having a boiling point of 20 - 80 °C. If the boiling point of the nucleating agent is below 20 °C, the nucleating agent may have a tendency to vaporize before the reaction takes place. In contrast, if the boiling point of the nucleating agent is above 80 °C, the nucleating agent may have a tendency to have not vaporized even by the end of the reaction.

The amount of the nucleating agent may be 0.5 - 5 parts by weight per 100 parts by weight of the total polyol comprising the polyol and any additional polyol compounds. If the proportion of the nucleating agent is below 0.5 parts by weight, the resulting rigid polyurethane foam is less likely to show significantly improved thermal insulating properties. In contrast, above a value of 5 parts by weight, increasing the proportion of the nucleating agent does not tend to further improve the thermal insulating capacity of the resulting rigid polyurethane foam, and thus is less economical.

The polyol mixture comprises a polyaromatic polyol in the form of a toluenediamine-based polyol, since this stabilizes the emulsified nucleating agent, thus improving the properties of the rigid polyurethane foam. The polyaromatic polyol may include, a methylenediphenyldiamine-based polyol, or a bisphenol-A-based polyol. Preferably, the polyaromatic polyol comprises the toluenediamine-based polyol only. The other polyol compounds present in the mixture may comprise a polyether polyol.

The proportion of the toluenediamine-based polyol is 15 - 70 parts by weight per 100 parts by weight of the total polyol. If the proportion of the polyaromatic polyol is below 15 parts by weight, the resulting rigid polyurethane foam is less likely to show significantly improved thermal insulating properties. In contrast, if the proportion of the polyaromatic polyol is above 70 parts by weight, the resulting rigid polyurethane foam has a tendency to become rather brittle.

In an embodiment of the present invention, the total amount of polyol comprises 15 - 70 parts by weight of a toluenediamine-based polyol having an OH value of 350 - 550, 10 - 30 parts by weight of a sucrose glycerine-based polyol having an OH value of 360 - 490, 5 - 15 parts by weight of a trimethylolpropane-based polyol having an OH value of 350 - 450, and 5 - 15 parts by weight of a glycerine-based polyol having an OH value of 168 - 670.

As the blowing agent, a hydrocarbon is useful because of the restriction on the use of CFCs and HCFCs. Preferably, the hydrocarbon is a cyclopentane. Despite the fact that this blowing agent has a relatively poor gas adiabatic index, the resulting rigid polyurethane foam has an effective thermal insulating quality due to a reduced size of the closed cells.

The emulsifying of the nucleating agent is more effectively carried out using a homomixer of approximately 1000 - 6000 rpm than using a static mixer. In the case where the total polyol mixture is not emulsified, that is, when the nucleating agent is emulsified with part of the total polyol component, the polyol mixture is mixed separately.

The present invention will now be illustrated by way of various Examples, which should not be considered as limiting the scope of the invention.

To obtain the results of the following Table 1, test specimens of the rigid polyurethane foam were produced with a vertical mold (1100 mm x 300 mm x 50 mm) and a high pressure foam generator. The amount of all components used was on the basis of 100 parts by weight of the total polyol. The temperature of all components before foaming was adjusted to 20°C. The premix was prepared by mixing all the components of the polyol mixture except the blowing agent. The emulsified nucleating agent was prepared with 30% of the premix, and then the emulsified nucleating agent was combined with the remaining premix. Finally, the blowing agent was added to make the polyol mixture. Rigid polyurethane foam was prepared by reacting the polyol mixture and the polyisocyanate.

The term "OH value" is used herein to indicate the hydroxyl value, and its unit is mg KOH/g, that is, it is the amount of KOH, measured by mg, consumed in neutralizing acetic acid which is obtained by acetylating and hydrolyzing 1 g of polyol. A Perfluorinated Alkene (PFA) in this table is a mixture having perfluorinated hexene as a main component.

Table 1

| | | Examples | | | | | | Comparative Example |
|---|---|---|---|---|---|---|---|---|
| | | 1 | 2 | 3* | 4* | 5 * | 6 * | 1 |
| Polyol | Polyol[1] | 60 | 60 | 10 | 10 | 10 | 10 | 60 |
| | Polyol[2] | 20 | 20 | 35 | 35 | 35 | 35 | 20 |
| | Polyol[3] | 10 | 10 | - | - | - | - | 10 |
| | Polyol[4] | 10 | 10 | 20 | 20 | 20 | 20 | 10 |
| | Polyol [5] | - | - | 35 | 35 | 35 | 35 | - |
| Catalyst | | 2.3 | 2.3 | 2.6 | 2.6 | 2.6 | 2.6 | 2.3 |
| Foam stabilizer | | 2.5 | 2.5 | 2.5 | 2.5 | 2.5 | 2.5 | 2.5 |
| Water | | 1.75 | 1.75 | 1.75 | 1.75 | 1.75 | 1.75 | 1.75 |
| Nucleating Agent [6] | | 2.5 | 2.5 | 2.5 | 2.5 | 0.3 | 0.3 | 2.5 |
| Blowing agent[7] | | 16.5 | 16.5 | 16.5 | 16.5 | 16.5 | 16.5 | 16.5 |
| Mix ratio[8] (polyol/ polyisocyanate) | | 100/112 | 100/112 | 100/114 | 100/114 | 100/114 | 100/114 | 100/112 |
| Cell size ($\mu$m) | | 100 - 150 | 100 - 150 | 150 - 200 | 150 - 200 | 200 - 250 | 200 - 250 | 200 - 250 |
| K-factor [9] | | 0.0143 | 0.0144 | 0.0146 | 0.0147 | 0.0154 | 0.0155 | 0.0155 |
| Stable time [10] (days) | | 7 | 6 | 2 | 1 | 3 | 2 | 0.25 |
| Emulsifying method[11] | | Homomixer | Static-mixer | Homomixer | Static-mixer | Homomixer | Static-mixer | - |

1 : toluenediamine-based polyol (OH value: 350-550)

2 : sucrose glycerine-based polyol (OH value: 360-490)

3 : trimethylolpropane-based polyol (OH value: 350-450)

4 : glycerine-based polyol (OH value: 168-670)

5 : sorbitol-based polyol (OH value: 400-500)

6 : nucleating agent (Perfluorinated Alkene (PFA)): from 3M

7 : cyclopentane

8 : mix ratio (all components mixed with polyol except polyisocyanate set the basis at 100)

9: kcal/m.h.°C (adiabatic index unit)

10 : stable time (When nucleating agent starts separating from polyol & sinks down)

* comparative

11 : Emulsifying method (the method of mixing the nucleating agent and a premix, which comprises the foam stabilizer, the catalyst, the water, the polyol, and the like)

EP 1 553 129 B2

The rigid polyurethane foams of Examples 1 and 2 exhibit a long stable time (6 days and 7 days, respectively), which indicates that the nucleating agent exists stably in the polyol mixture. Furthermore, they exhibit a relatively small closed cell size of 100 - 150 $\mu$m, and thus have an effective adiabatic index of 0.0143 and 0.0144 kcal/m.h.°C.

In Comparative Example 1, the polyol mixture had the same composition as in Examples 1 and 2, but the nucleating agent was not emulsified. The resulting foam has a very short stable time of 0.25 days, indicating that the nucleating agent is not particularly stable in the polyol mixture. The foam has a relatively large closed cell size and a poor adiabatic index.

In Examples 3 and 4 (both comparative), the compositions of the polyol mixtures differed from those of Examples 1 and 2, in that the amount of the toluenediamine-based polyol in the total polyol component was as small as 10 parts by weight. As for stable time, the foams of Examples 3 and 4 (both comparative) are superior to Comparative Example 1, but are inferior to Examples 1 and 2. In addition, the size of the closed cells and the adiabatic index of Examples 3 and 4 (both comparative) are inferior to the size of the closed cells and the adiabatic index of Examples 1 and 2.

In Examples 5 and 6 (both comparative), not only was the proportion of the toluenediamine-based polyol small, but also the amount of the nucleating agent was as little as 0.3 parts by weight. The properties of the rigid polyurethane foams produced by these methods are positioned between those of Comparative Example 1, wherein the nucleating agent is not emulsified, and Examples 3 and 4 (both comparative), wherein the amount of the toluenediamine-based polyol is relatively small. However, the stable times of Examples 5 and 6 (both comparative) are longer than those of Examples 3 and 4 (both comparative) due to the relatively small amount of the nucleating agent.

Furthermore, it can be seen that an emulsifying method using a homomixer has advantages over an emulsifying method using a static mixer. In addition, as discussed above, emulsifying the nucleating agent stabilizes the nucleating agent in the polyol mixture and improves the properties of the rigid polyurethane foam obtained. Also, the amount of polyaromatic polyol in the polyol mixture and the amount of the nucleating agent can play important roles in the stabilization of the nucleating agent and the improvement of the rigid polyurethane foam's properties. By using a stabilized nucleating agent, it is possible to obtain a rigid polyurethane foam having a closed cell of relatively small size and excellent heat insulating properties. This method is particularly useful when the blowing agent is a hydrocarbon.

Figure 1 is a flow chart showing operations in accordance with an embodiment of the invention. In this embodiment, the method to produce a rigid polyurethane foam comprises: emulsifying a nucleating agent with a portion of a total amount of polyol and a portion of a total amount of a foam stabilizer to form an emulsified nucleating agent (202); combining this with water, a catalyst, the remaining portion of the total amount of polyol, the remaining portion of the foam stabilizer, and a blowing agent to form the polyol mixture(204); and reacting the polyol mixture with a polyisocyanate (206). The portion of the total amount of polyol is typically 10 - 30 parts by weight of the total amount of polyol.

The nucleating agent comprises a perfluorinated alkene containing at least 6 carbon atoms and may have a boiling point of 20 - 80 °C. The amount of the nucleating agent is typically 0.5 - 5 parts by weight per 100 parts by weight of the total amount of polyol. The total amount of polyol comprises a polyaromatic polyol that is 15 - 70 parts by weight per 100 parts by weight of the total polyol component, and the polyaromatic polyol is a toluenediamine-based polyol. The blowing agent may, for example, be a hydrocarbon such as a cyclopentane.

The nucleating agent is preferably emulsifyied using a homomixer at approximately 1000 - 6000 rpm.

## Claims

1. A method of producing a rigid polyurethane foam, comprising preparing a polyol mixture comprising polyol and a nucleating agent, and reacting the polyol mixture with polyisocyanate, wherein the preparation of the polyol mixture comprises emulsifying the nucleating agent with some of the polyol to produce an emulsion, and combining the emulsified nucleating agent with the remaining polyol, said nucleating agent comprising a perfluorinated alkene containing at least 6 carbons, wherein 15 - 70 parts by weight of the total amount of polyol in the polyol mixture is a toluenediamine-based polyol.

2. A method according to claim 1, comprising including a foam stabiliser in the polyol mixture such that some or all of the foam stabiliser is present in said emulsion.

3. A method according to claims 1 or 2, wherein the emulsion is formed using 10 - 30 % by weight of the polyol in the polyol mixture supplied to the polyol-polyisocyanate reaction process.

4. A method according to any one of the preceding claims, wherein the polyol mixture comprises water, a catalyst, and a blowing agent.

5. A method according to any one of the preceding claims, wherein the polyol mixture comprises an additional foam stabilizer.

6. A method according to any one of the preceding claims, wherein the nucleating agent has a boiling point of 20-80°C.

7. A method according to any one of the preceding claims, wherein the amount of the nucleating agent is 0.5-5 parts by weight per 100 parts by weight of the total amount of polyol in the polyol mixture.

8. A method according to any one of the preceding claims, wherein the blowing agent is a hydrocarbon.

9. A method according to claim 8, wherein the hydrocarbon is a cyclopentane.

10. A method according to any one of the preceding claims, wherein emulsifying the nucleating agent comprises agitating with a homomixer at approximately 1000-6000 rpm.

11. An emulsion comprising polyol and a nucleating agent comprising a perfluorinated alkene containing at least 6 carbons, suitable for use in a method of rigid polyurethane foam production, wherein 15 - 70 parts by weight of the polyol mixture is a toluenediamine-based polyol.


**Patentansprüche**

1. Verfahren zur Herstellung eines Polyurethan-Hartschaums, das Folgendes umfasst: Herstellen einer Polyolmischung, die Polyol und einen Keimbildner umfasst, und Reagieren der Polyolmischung mit Polyisocyanat, worin die Herstellung der Polyolmischung das Emulgieren des Keimbildners mit etwas Polyol, um eine Emulsion herzustellen, und das Vereinigen des emulgierten Keimbildners mit dem verbleibenden Polyol umfasst, wobei der genannte Keimbildner ein perfluoriertes Alken, das mindestens 6 Kohlenstoffe enthält, umfasst, worin 15-70 Gewichtsteile der Gesamtmenge an Polyol in der Polyolmischung ein auf Toluoldiamin basierendes Polyol ist.

2. Verfahren nach Anspruch 1, das die Einfügung eines Schaumstabilisators in die Polyolmischung umfasst, sodass etwas oder der gesamte Schaumstabilisator in der genannten Emulsion vorliegt.

3. Verfahren nach den Ansprüchen 1 oder 2, worin die Emulsion unter Verwendung von 10-30 Gewichts-% an Polyol in der Polyolmischung, die dem Polyol-Polyisocyanat-Reaktionsverfahren zugeführt wird, gebildet wird.

4. Verfahren nach einem der vorstehenden Ansprüche, worin die Polyolmischung Wasser, einen Katalysator und ein Treibmittel umfasst.

5. Verfahren nach einem der vorstehenden Ansprüche, worin die Polyolmischung einen zusätzlichen Schaumstabilisator umfasst.

6. Verfahren nach einem der vorstehenden Ansprüche, worin der Keimbildner einen Siedepunkt von 20-80°C aufweist.

7. Verfahren nach einem der vorstehenden Ansprüche, worin die Menge des Keimbildners 0,5-5 Gewichtsteile pro 100 Gewichtsteile der gesamten Menge an Polyol in der Polyolmischung beträgt.

8. Verfahren nach einem der vorstehenden Ansprüche, worin das Treibmittel ein Kohlenwasserstoff ist.

9. Verfahren nach Anspruch 8, worin der Kohlenwasserstoff ein Cyclopentan ist.

10. Verfahren nach einem der vorstehenden Ansprüche, worin das Emulgieren des Keimbildners das Rühren mit einem Homomixer bei ungefähr 1000-6000 UpM umfasst.

11. Emulsion, die Folgendes umfasst: Polyol und einen Keimbildner, der ein perfluoriertes Alken, das mindestens 6 Kohlenstoffe enthält, umfasst, die zur Verwendung in einem Verfahren zur Herstellung von Polyurethan-Hartschaum geeignet ist, worin 15-70 Gewichtsteile der Polyolmischung ein auf Toluoldiamin basierendes Polyol sind.

**Revendications**

1. Procédé de production d'une mousse de polyuréthane rigide, comprenant la préparation d'un mélange de polyol comprenant du polyol et un agent de nucléation, et la réaction du mélange de polyol avec du polyisocyanate, dans lequel la préparation du mélange de polyol comprend l'émulsification de l'agent de nucléation avec une partie du polyol pour produire une émulsion, et la combinaison de l'agent de nucléation émulsifié avec le polyol restant, ledit agent de nucléation comprenant un alcène perfluoré contenant au moins 6 carbones, dans lequel 15 - 70 parties en poids de la quantité totale de polyol dans le mélange de polyol est un polyol à base de toluènediamine.

2. Procédé selon la revendication 1, comprenant l'inclusion d'un stabilisant de mousse dans le mélange de polyol de sorte qu'une partie du stabilisant de mousse ou la totalité est présente dans ladite émulsion.

3. Procédé selon les revendications 1 ou 2, dans lequel l'émulsion est formée en utilisant 10 - 30 % en poids du polyol dans le mélange de polyol fourni au processus réactionnel polyol - polyisocyanate.

4. Procédé selon l'une quelconque des revendications précédentes, dans lequel le mélange de polyol comprend de l'eau, un catalyseur, et un agent d'expansion.

5. Procédé selon l'une quelconque des revendications précédentes, dans lequel le mélange de polyol comprend un stabilisant de mousse supplémentaire.

6. Procédé selon l'une quelconque des revendications précédentes, dans lequel l'agent de nucléation a un point d'ébullition de 20 - 80° C.

7. Procédé selon l'une quelconque des revendications précédentes, dans lequel la quantité d'agent de nucléation est de 0,5 - 5 parties en poids pour 100 parties en poids de la quantité totale de polyol dans le mélange de polyol.

8. Procédé selon l'une quelconque des revendications précédentes, dans lequel l'agent d'expansion est un hydrocarbure.

9. Procédé selon la revendication 8, dans lequel l'hydrocarbure est un cyclopentane.

10. Procédé selon l'une quelconque des revendications précédentes, dans lequel l'émulsification de l'agent de nucléation comprend l'agitation avec un homomixer à environ 1000 - 6 000 tr/mn.

11. Emulsion comprenant du polyol et un agent de nucléation comprenant un alcène perfluoré contenant au moins 6 carbones, appropriée pour une utilisation dans un procédé de production de mousse de polyuréthane rigide, dans laquelle 15 - 70 parties en poids du mélange de polyol est un polyol à base de toluènediamine.

## FIG. 1

```
EMULSIFYING A NUCLEATING
AGENT WITH A PREDETERMINED
PORTION OF A TOTAL AMOUNT OF          202
POLYOL AND A PREDETERMINED
PORTION OF A TOTAL AMOUNT OF A
FOAM STABILIZER TO FORM A
POLYOL MIXTURE
```

↓

```
MIXING WATER, A CATALYST, A
REMAINING PORTION OF THE
TOTAL AMOUNT OF POLYOL, A             204
REMAINING PORTION OF THE
FOAM STABILIZER, AND A BLOWING
AGENT WITH THE POLYOL MIXTURE
```

↓

```
                                      206
REACTING THE MIXED POLYOL
MIXTURE WITH A POLYISOCYANATE
```